# EUROPÄISCHE PATENTANMELDUNG

(11) **EP 0 886 062 A2**
(43) Veröffentlichungstag der Anmeldung: **23.12.1998**
(21) Anmeldenummer: 98109804.9
(22) Anmeldetag: 28.05.1998
(51) Int. Cl.: F02M 25/07

(54) **Abgasrückführeinrichtung**

(30) Priorität: 18.06.1997 DE 19725668
(71) Anmelder: Daimler-Benz Aktiengesellschaft, 70567 Stuttgart (DE)
(72) Erfinder: Bender, Franz, 73240 Wendlingen (DE); Pfaff, Rüdiger, 70499 Stuttgart (DE); Wiltschka, Joachim, 70734 Fellbach (DE)

(57) **Zusammenfassung**

Die Erfindung betrifft eine Abgasrückführeinrichtung einer Brennkraftmaschine, die aus einem Luftansaugkanal und einem Abgasrückführkanal gebildet ist, der unter einem Winkel in den Luftansaugkanal hineinragt und von einem Tellerventil verschlossen wird, dessen Ventilschaft quer durch den Luftansaugkanal geführt ist, wobei der Abgasrückführkanal in Strömungsrichtung der Abgase hinter dem Tellerventil einen in Strömungsrichtung der Ansaugluft verlaufenden Leitungsabschnitt aufweist.

Es wird vorgeschlagen, daß der Leitungsabschnitt mit einem düsenförmigen Querschnitt in den Luftansaugkanal mündet. Dadurch erhält man für alle Zylinder der Brennkraftmaschine ein gleichmäßiges Abgasluftgemisch, dessen Abgasrückführrate nicht durch Ablagerungen an den Ventilteilen und Rohrquerschnitten über die Lebensdauer beeinträchtigt wird.

## Beschreibung

Die Erfindung betrifft eine Abgasrückführeinrichtung, gebildet aus einem Luftansaugkanal und einem Abgasrückfuhrkanal einer Brennkraftmaschine, mit den Merkmalen nach dem Oberbegriff von Anspruch 1.

Um die Verbrennung bei Brennkraftmaschinen und die Abgasqualität zu verbessern, kann ein Teil des Abgases aus einer Abgasleitung in einen Luftansaugkanal zurückgeführt werden. Für eine wirkungsvolle Abgasrückführung ist es wichtig, daS sich das Abgas gleichmäßig mit der Ansaugluft mischt und sich die zurückgeführte Abgasmenge nicht unbeabsichtigt über die Betriebszeit und Lebensdauer der Brennkraftmaschine verändert, sondern nur in Abhängigkeit der gewählten Regelparameter zugemischt wird. Ferner sollten die heißen Abgase die Steuerorgane der Abgasrückführeinrichtung thermisch nicht zu hoch belasten.

Es ist eine gattungsgemäße Angasrückführeinrichtung aus der EP 0 753 656 A1 bekannt, deren pneumatisches Stellglied derart auf einem Luftansaugkanal einer Brennkraftmaschine angeordnet ist, daß dessen Membranstange den Luftansaugkanal der zu dessen Strömungsrichtung durchragt und ein mit der Membranstange verbundenes Ventilglied, ein Tellerventil, den Strömungsquerschnitt des Abgasrückführkanals kontrolliert. Das vom Abgasstrom stark aufgeheizte Ventilglied und die Membranstange werden von dem vorbeiströmenden, kühleren Ansaugluftstrom gekühlt. Die im Abgasstrom enthaltenen Verunreinigungen, wie z.B. Ruß- und Rostpartikel sollen von dem Ansaugluftstrom mitgerissen werden, ohne daß sie zwischen die Membranstangenführung und den Membranstangenschaft gelangen. Dadurch soll vermieden werden, daß das Ventil klemmt.

Es ist ferner aus der DR 30 01 413 C2 eine Abgasrückführeinrichtung bekannt, deren Abgasrückführrohr zwischen einer Abgasleitung und einem Luftansaugkanal angeordnet ist. Ein Ende des Abgasrückführrohrs mit einer Entnahmeöffnung ragt in die Abgasleitung und verläuft zu dieser ein Stück koaxial, wobei die Entnahmeöffnung stromaufwärts zur Abgasströmung weist und von einer topfförmigen Abdeckung gegenüber dem Abgasstrom abgeschirmt ist. Die Abdeckung und eine Umlenkung des zurückzuführenden Abgases halten kleine Partikel, die sich im Abgasstrom befinden können, von der Abgasrückführanlage fern. Dadurch wird die Menge der Ablagerungen in den Gaskanälen der Abgasrückführanlage verringert und die Funktionsfähigkeit der Anlage verbessert. Feste Partikel im Abgas der Abgasrückführanlage führen ferner zu einem erhöhten Verschleiß der Brennkraftmaschine, insbesondere der Kolben, der Kolbenringe und der Zylinder. Außerdem beeinträchtigen sie die Schmierfähigkeit des Schmieröls und damit die Lager der Brennkraftmaschine.

Die Umfangswand der Abdeckung kann so gestaltet sein, daß durch einen Venturirohreffekt, Querschnittsverengung bzw. durch eine Düsenwirkung die eventuell doch eingedrungenen, kleinen Partikel mit dem Abgasstrom beschleunigt werden und einer Umlenkung der Abgase um 180° zur Entnahmeöffnung wegen der Massenträgheit nicht folgen können. Dadurch erreicht man, daß noch weniger Verunreinigungen in die Abgasrückfuhreinrichtung gelangen.

Neben dem Abgasrückführkanal mündet häufig noch eine Entlüftungsleitung für das Kurbelgehäuse in der Regel vor einem Verdichter in die Reinluftseite. Die Entlüftungsgase sind mit Öldampf angereichert und führen an den heißen Bauteilen der Abgasrückführeinrichtung zusammen mit den im Abgas enthaltenen Partikeln zu unerwünschten Ablagerungen, die die Funktion der Steuerorgane gefährden und die Steuerguerschnitte im Laufe der Zeit verkleinern.

Aus der DE 14 76 052 C1 ist eine Entlüftungseinrichtung für ein Kurbelgehäuse einer Vergaserbrennkraftmaschine bekannt, bei der eine Entlüftungsleitung im Bereich der engsten Stelle eines Venturirohrs eines Vergasers mündet. Dadurch wird erreicht, daß der Unterdruck in der Entlüftungsleitung mit steigender Motorbelastung ebenfalls ansteigt.

Der Erfindung liegt die Aufgabe zugrunde, eine Abgasrückführeinrichtung nach dem Obergriff von Anspruch 1, insbesondere in bezug auf den Einfluß einer Kurbelgehäuseentlüftung, zu verbessern. Sie wird gelost durch die Merkmale des ersten Anspruchs. Weitere Ausgestaltungen sind Gegenstand der Unteransprüche.

Bei der erfindungsgemäßen Abgasrückführeinrichtung ragt der Abgasrückführkanal in einen Luftansaugkanal und leitet die Abgase hinter einem Tellerventil in Strömungsrichtung der Ansaugluft zentrisch in den Luftansaugkanal ein. Die Ansaugluft kommt somit nicht mit dem Tellerventil in Berührung, so daß Öl und Ruß aus den Entlüftungsgasen des Kurbelgehäuses sich nicht in der Ventilführung oder am Ventilsitz ablagern können. Derartige Ablagerungen können einerseits bewirken, daß das Tellerventil klemmt, und andererseits, daß sich die Strömungsquerschnitte im Bereich des Ventilsitzes im Laufe der Zeit verengen. Dies wird durch die Erfindung vermieden, und es wird gleichzeitig eine gleichmäßige Abgasrückführrate über der Laufzeit der Brennkraftmaschine erreicht.

Ein düsenförmiger Querschnitt des Abgasrückführkanals im Bereich seiner Mündung, der als separates Bauteil z.B. als Ejektor oder als Venturidüse ausgebildet sein kann, beschleunigt und erhöht den Abgasstrom, der die Ansaugluft mitreißt und sich gut und gleichmäßig mit dieser mischt. Die Ansaugluft kühlt ihrerseits die im Luftansaugkanal angeordneten Teile des Abgasrückführkanals, so daß das Tellerventil und die zugehörigen Steuerteile thermisch weitgehend entlastet sind.

Der Luftansaugkanal ist zweckmäßigerweise im Bereich der Mündung des Abgasrückführkanals im Querschnitt verengt. Da infolge der beschleunigten Stromung der Druck abfällt, erhöht sich das Druckgefälle gegenüber dem Leitungsabschnitt des Abgasstroms und man erzielt eine höhere Abgasrückführrate. Wenn vermehrt Abgas zurückgeführt wird, vermindert sich entsprechend die Ansaugluft und eine sonst notwendige Drosselklappe im Luftansaugkanal kann entfallen. Ferner wird durch Beschleunigung der Gassäule im Ansaugkanal die Ladungswechselarbeit verringert und der Wirkungsgrad der Brennkraftmaschine verbessert.

Gemäß einer Ausgestaltung der Erfindung fördert ein Prallschirm das Durchmischen von Abgas und Frischluft, der in Strömungsrichtung hinter der Zumischstelle im Luftansaugkanal angeordnet ist. Dadurch kann man die düsenförmige Verengung erweitern oder ganz auf sie verzichten.

Das Tellerventil öffnet entgegen der Strömungsrichtung der Abgase. Dadurch schließt es sicher, selbst wenn in dem Abgasrückführkanal Druckpulsationen auftreten.

Gemäß einer weiteren Ausgestaltung erweitert sich der Abgasrückführkanal vor dem Tellerventil zu einer doppelkonusförmigen Ventilkammer. Dadurch wird zunächst die Strömung verzögert und anschließend wieder beschleunigt, so daß Partikel abgeschieden werden. Ferner wird mit der Querschnittserveiterung die Montage des Tellerventils erleichtert, zumal wenn die Ventilkammer im Bereich ihres größten Durchmessers geteilt ist und ein Teil, das einen Anschlußstutzen aufweist, mit einem Flansch an dem anderen Teil angeflanscht ist, das mit dem Luftansaugkanal verbunden ist. Gleichzeitig kann der Luftansaugkanal im Bereich der Verbindung mit dem Abgasrückführkanal leichter hergestellt werden. Zweckmäßigerweise bildet die Luftansaugleitung in diesem Bereich mit dem einen Teil der Ventilkammer und dem Leitungsabschnitt des Abgasrückführkanals ein separates Verbindungsgehäuse, das zudem noch eine Ventilführung für das Tellerventil aufweist und z.B. aus Guß oder Druckguß hergestellt werden kann.

Weitere Einzelheiten und Vorteile ergeben sich aus der folgenden Beschreibung zweier Ausführungsbeispiele anhand zweier Zeichnungen. In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

Es zeigt:

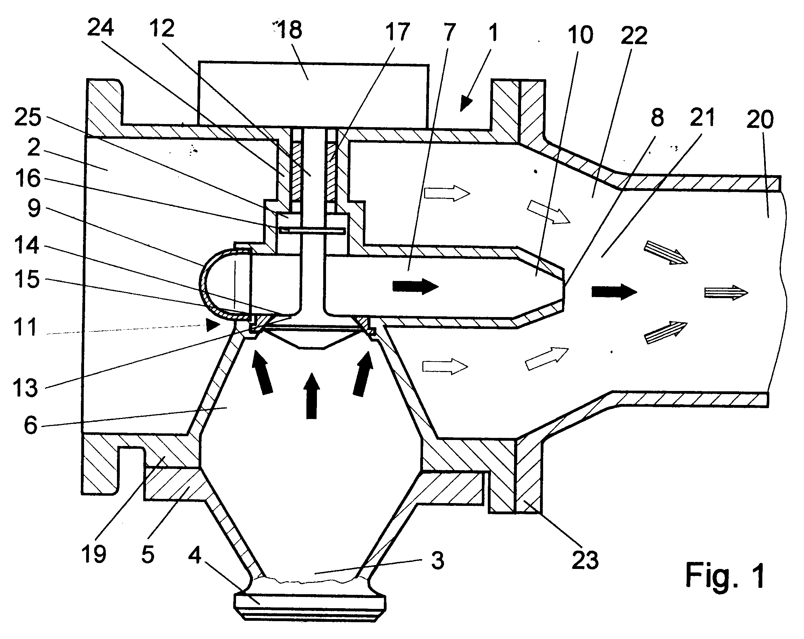

Fig. 1 einen teilweisen Querschnitt durch eine erfindungsgemäße Abgasrückführeinrichtung und
Fig. 2 eine Variante zu Fig. 1.

Die Abgasrückführeinrichtung 1 einer nicht näher dargestellten Brennkraftmaschine wird aus einem Luftansaugkanal 2 und einem Abgasrückführkanal 3 gebildet, der unter einem annähernd rechten Winkel an den Luftansaugkanal 2 anschließt. Denkbar ist auch jeder andere strömungsgünstige Winkel.

Die Strömung der zurückgeführten Abgase ist mit schwarzen Pfeilen, die Strömung der Ansaugluft mit weißen Pfeilen und die Strömung des Abgasluftgemisches mit schraffierten Pfeilen gekennzeichnet. Der Abgasrückführkanal 3 ragt in den Luftansaugkanal 2 und besitzt einen Leitungsabschnitt 7, der im wesentlichen koaxial zum Luftansaugkanal 2 verläuft und stromabwärts eine Mündung 8 hat. Im Bereich der Mündung 8 hat der Leitungsabschnitt 7 einen düsenförmigen Querschnitt 10.

Der Luftansaugkanal 2 der Abgasrückführeinrichtung 1 weist durchgehend eine gleiche Strömungsquerschnittsfläche auf. Im Bereich des Leitungsabschnitts 7 ist sein Durchmesser wegen der stömungshindernden Einbauten entsprechend vergrößert. Danach besitzt der Luftansaugkanal 2 im Bereich einer Zumischstelle 21 ebenfalls eine Querschnittsverengung 22. Beide Maßnahmen fördern einzeln und gemeinsam ein gutes Durchmischen der Abgase mit der Ansaugluft, so daß alle Zylinder der Brennkraftmaschine ein gleichmäßiges Abgasluftgemisch erhalten. Die Querschnitte senkrecht zur Zeichenebene sowohl des düsenförmigen Querschnitts 10 als auch der Querschnittsverengung 22 können eine vom Kreis abweichende Form erhalten und z.B. oval gestaltet sein, damit Kondensat ablaufen kann und sich nicht in dem Leitungsabschnitt 7 oder Luftansaugkanal 2 ansammelt.

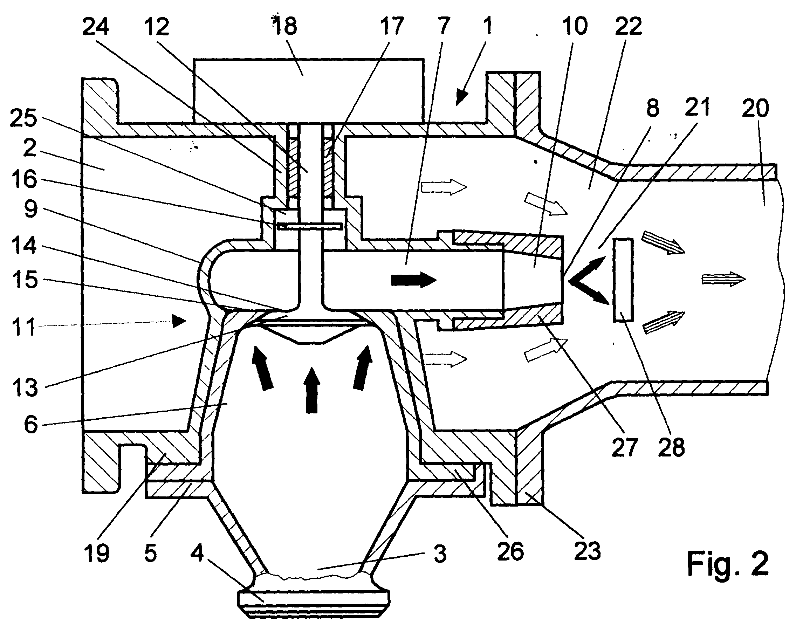

An der der Mündung 8 gegenüber liegenden Seite ist der Leitungsabschnitt 7 strömungsgünstig verschlossen. Zur Vereinfachung der Herstellung geschieht dies zweckmäßigerweise durch eine Kappe 9, die in eine Öffnung des Leitungsabschnitts 7 eingesetzt ist, wobei auch die in Fig. 2 dargestellte einstückige Ausbildung der Kappe 9 mit dem Leitungsabschnitt 7 ausführbar ist.

Der Abgasrückführkanal 3 wird von einem Tellerventil 11 verschlossen, dessen Ventilteller 13 an einem Ventilsitzring 15 anliegt und entgegen der Strömungsrichtung strömungsgünstig, beispielsweise kegelig oder halbkugelförmig, ausgebildet ist und von einer Betätigungsvorrichtung 18 über einen Ventilschaft 12 entgegen der Strömungsrichtung des Abgases geöffnet wird. Die Betätigungsvorrichtung 18 kann mechanisch, hydraulisch, pneumatisch, elektromotorisch oder magnetisch betrieben werden. Sie öffnet und schließt das Tellerventil 11 in Abhängigkeit von gewählten Regelparametern, um den Betrieb der Brennkraftmaschine entsprechend der jeweiligen Situation zu optimieren.

Da das Tellerventil 11 im geschlossenen Zustand vom Abgasdruck beaufschlagt wird, schließt es stets sicher. Ferner ragt der Ventilteller 13 mit seiner Oberseite 14 in den Leitungsabschnitt 7 des Abgasrückführkanals 3. Dadurch wird gewährleistet, daß Kondensat, das sich bei der Abkühlung am Ventilschaft 12 bilden kann, auf die Wandung des Leitungsabschnitts 7 abgeleitet wird und nicht zu Korrosion an dem Ventilsitz führt. Das Kondensat wird weiter durch die besondere Gestaltung des düsenförmigen Querschnitts 10 abgeleitet oder im Betrieb durch die heißen Abgase verdampft und mitgeführt.

In Strömungsrichtung hinter dem Ventilteller 13 ist am Ventilschaft 12 ein Prallschirm 16 angeordnet. Er verhindert, daß eine Ventilführung 17 des Tellerventils 11 unmittelbar von den heißen Abgasen angeströmt wird. Die Ventilführung 17, die im übrigen von der kühleren Ansaugluft gekühlt wird, ist dadurch gegen thermische Überlastung und Verschmutzung durch kleine Partikel geschützt. Ferner ist die Ventilführung 17 von einem Gehäuseteil 24 umgeben, das dicht mit dem Leitungsabschnitt 7 und dem Luftansaugkanal 2 verbunden ist, um zu verhindern, daß Öl aus der Kurbelgehäuseentlüftung in die trockene Ventilführung 17 gelangt. Das Gehäuseteil 24 hat eine zylindrische Ausnehmung 25, in der der Prallschirm 16 mit Spiel angeordnet ist und somit die Ventilführung 17 noch wirkungsvoller schützt.

Um die Fertigung zu vereinfachen, wird der Luftansaugkanal 2 im Bereich der Verbindung mit dem Abgasrückführkanal 3 als separates Verbindungsgehäuse 19 ausgeführt, das an einem Flansch 23 eines Ladeluftverteilerrohrs 20 angeflanscht ist.

Der Abgasrückführkanal 3 weist vor dem Tellerventil 11 eine Erweiterung in Form einer im wesentlichen doppelkonusförmigen Ventilkammer 6 auf, die im Bereich ihres größten Durchmessers geteilt ist. Ein Teil ist mit dem Verbindungsgehäuse 19 einstückig ausgeführt, während das andere Teil, das einen Anschlußstutzen 4 für eine Abgasrückführleitung enthält, über einen Flansch 5 an dem Verbindungsgehäuse 19 befestigt ist. Dadurch ist das Tellerventil 11 leicht zugänglich und einfach zu montieren. Gleichzeitig ist der Herstellungsaufwand für das Verbindungsgehäuse 19 relativ gering.

Gemäß Fig. 2 ist zweckmäßigerweise in den Teil, der mit dem Verbindungsgehäuse 19 einstückig ausgeführt ist, ein Einsatz 26 eingesetzt, der den Ventilsitz umfaßt, wodurch sich eine größere Zugangsöffnung erreichen läßt. Der düsenförmige Querschnitt 10 des Leitungsabschnittes 7 ist durch ein separates Düsenstück 27 gebildet, das auf den Leitungsabschnitt 7 aufgesetzt ist. In Strömungsrichtung hinter der Zumischstelle 21 ist ein weiterer Prallschirm 28 in der Luftansaugleitung 2 angeordnet, der ein Durchmischen von Abgas und Frischluft fördert. Schließlich kann man das Verbindungsgehäuse 19 einstückig mit dem Anschlußstutzen 4 im Spritzgußverfahren ohne Kern herstellen.

## Patentansprüche

1. Abgasrückführeinrichtung (1) einer Brennkraftmaschine, gebildet aus einem Luftansaugkanal (2) und einem Abgasrückfuhrkanal (3), der unter einem Winkel in den Luftansaugkanal (2) hineinragt und von einem Tellerventil (11) verschlossen wird, dessen Ventilschaft (12) quer durch den Luftansaugkanal (2) geführt ist, wobei der Abgasrückführkanal (3) in Strömungsrichtung der Abgase hinter dem Tellerventil (11) einen in Strömungsrichtung der Ansaugluft verlaufenden Leitungsabschnitt (7) aufweist, dadurch gekennzeichnet, daß der Leitungsabschnitt (7) mit einem düsenförmigen Querschnitt (10) in den Luftansaugkanal (2) mündet.

2. Abgasrückführeinrichtung (1) nach Anspruch 1, dadurch gekennzeichnet, daß der Luftansaugkanal (2) im Bereich der Mündung (8) des Abgasrückführkanals (3) eine Querschnittsverengung (22) aufweist.

3. Abgasrückführeinrichtung (1) nach Anspruch 1 oder 2, dadurch gekennzeichnet, daß das Tellerventil (11) mit seinem Ventilschaft (12) durch einen zum Luftansaugkanal (2) achsparallelen Leitungsabschnitt (7) des Abgasrückführkanals (3) geführt ist, wobei in dem Abgasrückführkanal (3) am Übergang zu dem Leitungsabschnitt (7) ein Ventilsitz angeordnet ist, an dem das Tellerventil (11) mit seinem Ventilteller (13) dichtend anliegt.

4. Abgasrückführeinrichtung (1) nach Anspruch 3, dadurch gekennzeichnet, daß der Ventilsitz von einem Ventilsitzring (15) gebildet wird.

5. Abgasrückführeinrichtung (1) nach Anspruch 3 oder 4, dadurch gekennzeichnet, daß das Tellerventil (11) mit der Oberseite (14) seines Ventiltellers (13) in den Leitungsabschnitt (7) vorsteht.

6. Abgasrückführeinrichtung (1) nach einem der Ansprüche 3 bis 5, dadurch gekennzeichnet, daß eine mechanische, elektrische oder hydraulische Betätigungsvorrichtung (18) das Tellerventil (11) entgegen der Strömungsrichtung der Verbrennungsgase öffnet.

7. Abgasrückführeinrichtung (1) nach Anspruch 6, dadurch gekennzeichnet, daß sich der Abgasrückführkanal (3) vor dem Tellerventil (11) zu einer im wesentlichen doppelkonusförmigen Ventilkammer (6) erweitert.

8. Abgasrückführeinrichtung (1) nach Anspruch 7, dadurch gekennzeichnet, daß die Ventilkammer (6) im Bereich ihres größten Durchmessers geteilt ist und ein Teil, das einen Anschlußstutzen (4) aufweist, mit einem Flansch (5) an dem anderen Teil angeflanscht ist, das mit dem Luftansaugkanal (2) verbunden ist.

9. Abgasrückführeinrichtung (1) nach Anspruch 8, dadurch gekennzeichnet, daß der Luftansaugkanal (2) mit dem einen Teil der Ventilkammer (6) und dem Leitungsabschnitt (7) des Abgasrückführkanals (3) ein Verbindungsgehäuse (19) bildet, das eine Ventilführung (17) aufweist.

10. Abgasrückführeinrichtung (1) nach Anspruch 8, dadurch gekennzeichnet, daß die Ventilkammer (6) einen Einsatz (26) aufweist, der den Ventilsitz umfaßt.

11. Abgasrückführeinrichtung (1) nach einem der vorangehenden Ansprüche, dadurch gekennzeichnet, daß das Tellerventil (11) an seinem Ventilschaft (12) einen Prallschirm (16) aufweist, der die Ventilführung (17) gegenüber den Abgasen abschirmt, die durch die Ventilöffnung in den Leitungsabschnitt (7) einströmen.

12. Abgasrückführeinrichtung (1) nach Anspruch 11, dadurch gekennzeichnet, daß das Gehäuseteil (24) eine zum Leitungsabschnitt (7) hin offene, zylindrische Ausnehmung (25) aufweist, in der mindestens ein an dem Ventilschaft (12) befestigter Prallschirm (16) mit Spiel angeordnet ist.

13. Abgasrückführeinrichtung (1) nach einem der vorangehenden Ansprüche, dadurch gekennzeichnet, daß der Leitungsabschnitt (7) an der seiner Mündung (8) entgegengesetzten Seite strömungsgünstig, insbesondere durch eine Kappe (9), verschlossen ist.

14. Abgasrückführeinrichtung (1) nach einem der vorangehenden Ansprüche, dadurch gekennzeichnet, daß die Ventilführung (17) von einem Gehäuseteil (24) umgeben ist, das den Leitungsabschnitt (7) mit Luftansaugkanal (2) dicht verbindet.

15. Abgasrückführeinrichtung (1) nach einem der vorangehenden Ansprüche, dadurch gekennzeichnet, daß der düsenförmige Querschnitt (10) durch ein separates Düsenstück (27) gebildet wird, das auf den Leitungsabschnitt (7) gesetzt ist.

16. Abgasrückführeinrichtung (1) nach einem der vorangehenden Ansprüche, dadurch gekennzeichnet, daß in Strömungsrichtung hinter der Zumischstelle (21) ein Prallschirm (28) in der Luftansaugleitung (2) vorgesehen ist.
